# EUROPÄISCHE PATENTSCHRIFT

(11) **EP 3 581 833 B1**
(45) Veröffentlichungstag und Bekanntmachung des Hinweises auf die Patenterteilung: **19.05.2021**
(21) Anmeldenummer: 18000511.8
(22) Anmeldetag: 11.06.2018
(51) Int. Cl.: F16K 1/22, F16K 1/226

(54) **SECHSFACH ASYMMETRISCH AUFGEBAUTE ABSPERRKLAPPE**
SEXTUPLE ASYMMETRICALLY CONSTRUCTED BUTTERFLY VALVE
VANNE PAPILLON À SIX ASYMÉTRIES

(43) Veröffentlichungstag der Anmeldung: 18.12.2019
(73) Patentinhaber: Gaida, Gregor, 48-100 Glubczyce (PL)
(72) Erfinder: Gaida, Gregor, 48-100 Glubczyce (PL)

(56) Entgegenhaltungen:
- EP-A1- 0 089 341
- CN-A- 103 759 027
- CN-U- 205 745 342
- DE-A1-102008 011 371
- KR-A- 20150 117 181
- US-A- 4 770 393

## Beschreibung

Zur Regelung des Flußes eines Mediums in einer Rohrleitung werden verschiedene Armaturen verwendet. Eine der am häufigsten verwendeten Armaturen ist eine Absperrklappe. In der einfachsten Form der Absperrklappe ist in einem Absperrklappengehäuse eine Klappenscheibe drehbar gelagert. In der einfachsten Form ist das Gehäuse im wesentlichen rotationssymmetrisch um die Rohrleitungsachse herum ausgeführt und innen mit Elastomeren ausgekleidet. Die Klappenscheibe ist ebenfalls kreisrund und ist meist aus Metall und meist im Außendurchmesser größer als der Innendurchmesser der Elastomerauskleidung des Gehäuses. Die Klappenscheibe ist meist durch eine Welle drehbar um die Klappenscheibendrehmitte im Gehäuse gelagert. Üblich sind Drehwinkel von 90°, man spricht dann von Schwenkarmaturen.

Wird die Klappenscheibe parallel zur Rohrleitungsachse gestellt, ist der Mediumsstrom in der Rohrleitung nahezu ungehindert möglich. Wird die Klappenscheibe um 90° geschwenkt, so daß sie senkrecht zur Rohrleitungsachse liegt und am gesamten Umfang in den Elastomer gepreßt ist, wird der Mediumsstrom abgesperrt.

In dieser einfachsten Ausführung spricht man von zentrisch aufgebauten Klappen. Die Klappenscheibendrehmitte liegt in der Mitte der Rohrleitungsachse, die Klappenscheibe liegt in der Mitte der Dichtungsebene, die Dichtfläche ist rotationssymmetrisch, der Umfang der Klappenschiebe ist rotationssymmetrisch, usw.

Hierbei sind die Patente WO82 / 03899 und US 4 770 393 A zu nennen, die eine Fortenwicklung dieses Prinzips darstellen. Im zuerst genannten Patent wird statt einer kugelförmigen Scheibe ein Toroid benutzt. US 4 770 393 A Patent wird die Klappenscheibe mittels zweier unterschiedlicher Drehradien dargestellt.

In der Patentschrift DE 10 2008 011 371 A1 werden die verschiedenen weiteren Bauweisen von zum damaligen Zeitpunkt im Markt befindlichen Absperrklappen beschrieben um anschließend die vierfach asymmetrische Bauweise zu erläutern. Die dreifach - bzw. vierfach asymmetrische Bauweise stellen hiernach die am weitesten entwickelten Bauweisen von Absperrklappen dar.

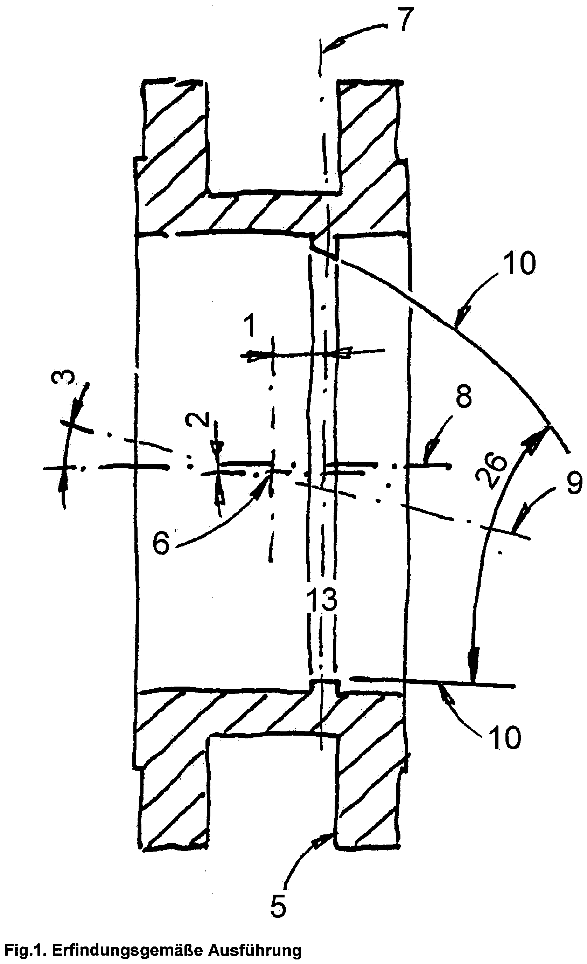

Fig.1 stellt schematisch die Gestaltung der Dichtungsfläche 13 einer solchen Absperrklappe dar. Im Gehäuse 5 der Absperrklappe, das zu großen Teilen rotationssymmetrisch zur Rohrleitungsachse 8 gestaltet ist und über Flansche an beiden Enden verfügen kann, die zum Anschluß an die Rohrleitung benutzt werden, ist eine Dichtungsfläche 13 ausgebildet, die häufig auch Sitz genannt wird. Gegen diese Dichtungsfläche 13 werden Dichtungen gepreßt, die meist in der Klappenscheibe sitzen.

Beide Bauweisen kennzeichnen sich dadurch aus, daß die Dichtungsfläche 13 durch einen Teil der Mantelfläche einer Pyramide dargestellt wird. Die Mantelfläche wird also geometrisch durch einen Punkt definiert, von dem aus Strahlen zu einer Grundfläche verlaufen. Diese Definition trifft sowohl auf einen Konus als auch auf eine Pyramide zu. An dieser Stelle sei angemerkt, daß jeder Konus eine Pyramide ist, daß aber nicht jede Pyramide ein Konus ist (Vorlesung "Grundlagen der Schulgeometrie" der Universität Erlangen: "..der Kegel kann als Grenzfall einer n-seitigen Pyramide betrachtet werden..". (http://www.didmath.ewf.unierlangen.de/vhb/geometrie/kegel/Kegel.html). Im Nachfolgenden wird daher der Begriff der Pyramide auch für kegelartige Gebilde benutzt.

Im Falle der dreifach asymmetrisch aufgebauten Armatur ist diese Grundfläche stets ein Kreis. Es läßt sich immer eine Ebene finden, die den Kegel so schneidet, daß sich als Schnittkontur ein Kreis ergibt. Ebenen die den gleichen Normalenvektor besitzen, werden bei Schnitten mit dem Kegel der dreifach asymmetrisch aufgebauten Armatur stets Kreise ergeben, lediglich die Größe variiert.

Im Falle einer vierfach asymmetrisch aufgebauten Armatur kann diese Grundfläche beliebige Formen annehmen, wobei die Form ebenfalls immer identisch ist, auch bei Schnitten mit anderen Ebenen, solange die Ebenen den gleichen Normalenvektor besitzen. Auch hier wird lediglich die Größe variiert.

Beide Bauweisen besitzen also die Gemeinsamkeit, daß die Schnitte senkrecht zur Achse 9 durch die Mantelfläche 10 entlang der Symmetrieachse 9 der Mantelfläche der Pyramide stets geometrisch ähnlich sind, also durch bloße Skalierung ineinander überführt werden können.

Am Beispiel der dreifach asymmetrisch aufgebauten Absperrklappe, bei dem die den Sitz beschreibende Mantelfläche durch einen nicht windschiefen Kegel beschrieben wird, bedeutet das, daß senkrecht zur Achse 9 gelegte Schnitte durch die Mantelfläche 10, stets von der Form her identisch sind, also Kreise sind. Lediglich der Durchmesser der Kreise ändert sich je nach Lage des Schnittes entlang der Achse 9.

Am Beispiel der vierfach asymmetrisch aufgebauten Absperrklappe mit rechteckiger Grundfläche bedeutet das, daß senkrecht zur Achse 9 gelegte Schnitte durch die Mantelfläche 10, stets Rechtecke mit stets identischem Seitenverhältnis sind.

Für beide Bauweisen können die Schnittebenen beliebig sein, solange die Schnittebenen zueinander parallel sind, wird sich stets ein geometrisch ähnlicher Schnitt in jeder Schnittebene ergeben und jeder dieser Schnitte läßt sich auf jeden anderen skalieren.

Ein gemeinsames Ziel der fortschreitenden Entwicklung der Absperrklappen ist es, das Reibungsverhalten zwischen Dichtfläche 13 und Dichtung zu minimieren bei möglichst kleinem Versatz 2, dessen Vergrößerung zu einer Drehmomenterhöhung bei der Betätigung der Absperklappe führen würde. So sind aus der zunächst einfachen Konstruktion der zentrisch aufgebauten Klappe, die einfach exzentrisch aufgebaute, die doppelt exzentrisch aufgebaute, die dreifach- und vierfachexzentrisch aufgebaute Klappe entstanden.

Ziel der vorliegenden Erfindung ist es, eben diese Reibung durch eine geeignete Wahl der Form der Dichtungsfläche 13 zu minimieren. Dies wird im Folgenden erläutert.

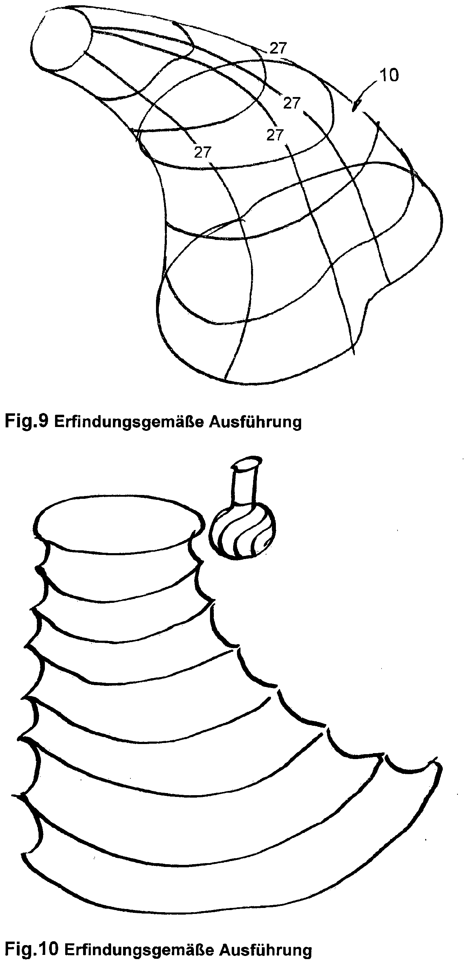

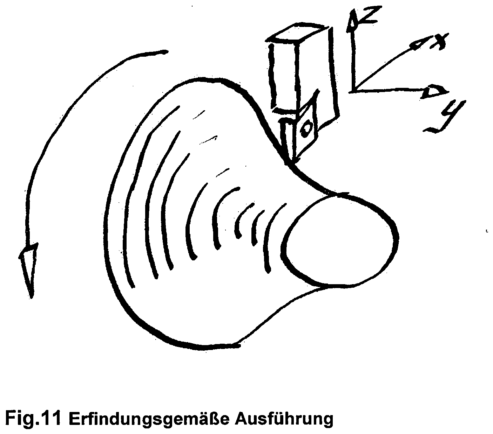

Die Dichtungsfläche 13 wird in der erfindungsgemäßen Gestaltung durch die Mantelfäche eines Körpers dargestellt, der weder ein Konus, noch eine Pyramide ist. Der erfindungsgemäße Körper kann eine beliebig geformte, sogenannte Freiformfläche sein. Vergleiche [Erich Hartmann: Geometry and Alagrithms for CAD. (PDF; 2,87 MB) Lecture Note, 2003, TU Darmstadt, Seite 117, Figure 10.7.b und Seite 147, Figure 13.1 b)]

Somit ist die erfindungsgemäße Dichtungsfläche 13 die Mantelfläche eines Körpers der durch mindestens zwei Querschnitte beschrieben wird und durch Kurven, oder Strahlen, bzw. Streckenabschnitte, die diese Querschnitte miteinander verbinden, dargestellt wird. Hier sei klarzustellen, daß Kurven der Allgemeinbegriff für beliebig angeordnete stetige Punktanreihungen ist. Ein gerader Streckenabschnitt ist in dem Begriff Kurve ebenso enthalten wie beliebige andere Sonderformen wie eine Parabel, ein Bogensegment, eine Hyperbel, eine Bezierkurve, usw.

An zwei Ausführungsbeispielen werden die unzähligen, möglichen Ausführungsformen erläutert. Der erfindungsgemäße Körper in Figur 9 verdeutlicht, welche Formen die Mantelfläche des Körpers 10 annehmen kann. Beliebig angeordnete Kurven des Drahtgittermodells der Mantelfläche des Körpers 10 besitzen an keiner Stelle einen Querschnitt, der an anderer Stelle gefunden werden könnte. Diese Figur wurde lediglich beigefügt um aufzuzeigen, welche Freiheiten diese erfindungsgemäße Gestaltungsart besitzt.

Um die Erläuterung der Erfindung zu vereinfachen, werden in Darstellungen die Kurven der Mantelfläche **10** zum Teil als Geraden dargestellt. Dabei wird immer zur Vereinfachung jeweils die Gerade benutzt, die in der Ebene 7 der Dichtungsfläche **13** im jeweiligen Punkt der Mantelfläche **10** als Tangente angelegt werden kann. Dabei sei aber ausdrücklich klargestellt, daß Geraden nicht notwendig sind, sondern vielmehr den Gestaltungsspielraum der Erfindung einengen. Dank dieser Annäherung kann aber auf sinnvolle Weise eine Beschreibung im Text erfolgen und Vergleiche zu bisherigen Lösungen können leichter erläutert werden.

Bei allen bisherigen Absperrklappenlösungen entfernt sich die Dichtung in der Schnittebene 14 am langsamsten von der Dichtungsfläche 13. Dies folgt schlicht aus den geometrischen Begebenheiten der Dichtungsfläche und dem Abstand des jeweiligen Dichtungsflächenbereiches von der Scheibendrehmitte 6.

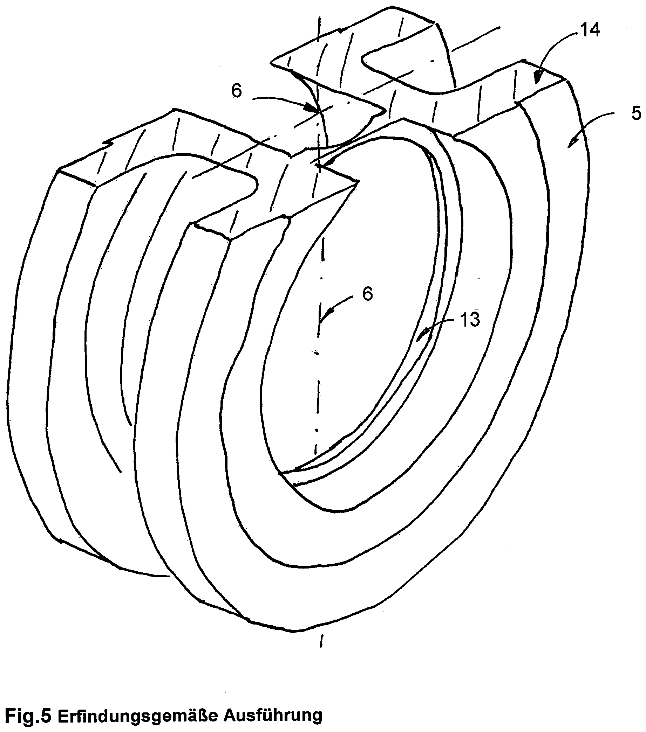

Am Beispiel einer Absperrklappe DN300, dreifach asymmetrisch aufgebaut und mit 5° geöffneter Scheibe ergibt sich ein Abstand der Dichtung von der Dichtungsfläche 13 von mehreren Millimetern in der Ebene des Schnittes analog Fig.1 und von wenigen Zehnteln Millimeter in der Ebene 14 analog Fig.5.

Mit der erfindungsgemäßen Lösung ergibt sich erstmals die Möglichkeit daß sich am gesamten Umfang der Dichtungsfläche 13 die Dichtung ähnlich, oder sogar identisch schnell mit der Drehung der Klappenscheibe von der Dichtungsfläche entfernt. Dies bedeutet für das o.g. Beispiel, daß bei der Absperrklappe DN300, sechsfach asymmetrisch aufgebaut und mit 5° geöffneter Scheibe, der Abstand der Dichtung von der Dichtungsfläche, an jeder Stelle der Dichtung den gleichen Wert besitzen kann. Dies ist mit den bisherigen Lösungen nicht möglich gewesen.

Aus diesem Gedankengang ergibt sich auch automatisch die Anleitung für die Konstruktion der Dichtungsfläche einer erfindungsgemäßen Absperrklappe:
A. Man wähle die Form der Dichtungsfläche 13 in der Dichtungsebene 7, z.B. vorzugsweise einen Kreis.
B. Man drehe diesen Querschnitt um die Scheibendrehmitte 6 z.B. um 2° in Öffnungsrichtung der Klappenscheibe
C. Man lege den gewünschten Abstand fest, den die Dichtung nach der Drehung um 2° erreichen soll, z.B. 0,3mm
D. Man versetze jeden Punkt des unter A gewählten und gemäß B gedrehten Querschnittes um den unter C gewählten Abstand. Die so innerhalb der Ebene des unter B gedrehten Querschnittes erzeugten Punkte sind Punkte der Mantelfläche der Dichtungsfläche 13
E. Man drehe den Querschnitt aus B um weitere 2° und verfahre weiter analog C und D.
F. Durch die so in drei Ebenen erzeugten Punkte wird ein Gitternetz gelegt, welches der Mantelfläche der Dichtungsfläche 13 entspricht.

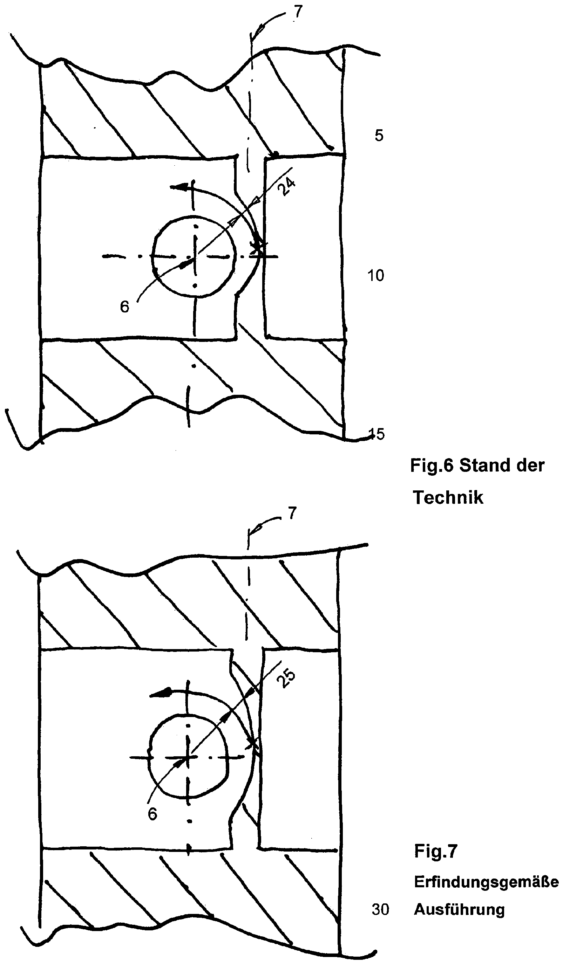

Die Konstruktion einer solchen Dichtungsfläche kann aber am einfachsten erfolgen durch das Erstellen von mehreren Schnitten in Ebenen die parallel zur Ebene 14 liegen und die Dichtungsfläche 13 schneiden. Ausgehend vom gewünschten Querschnitt in der Dichtungsebene 7, der idealerweise kreisrund sein sollte, werden in jeder der Schnittebenen Kreisbögen um die Klappenscheibendrehmitte 6 geschlagen, analog zur Bewegung der Dichtung während der Klappenscheibenöffnung und zwar ausgehend vom Schnittpunkt der Dichtungsebene 7 mit der jeweiligen Schnittebene, z.B. Ebene 14. Die Konstruktion eines solchen Kreisbogens ist in Fig. 7 schematisch dargestellt. Ein gewünschter Abstand 25 wird festgelegt, den die Dichtung nach einem definierten Öffnungswinkel (z.B. 2°) der Klappenscheibe von der Dichtungsfläche 13 erreichen soll. Der zuvor eingezeichnete Kreisbogen wird um diesen Abstand versetzt. Am Kreuzungspunkt zwischen diesem versetzten Kreisbogen und dem gewählten Klappenscheibenöffnungswinkel ergibt sich ein Punkt der Dichtungsfläche 13. Analog wird für einen größeren Öffnungswinkel (z.B. 4°) verfahren. Man erhält in dieser Ebene somit drei Punkte:
- Klappe geschlossen
- Klappe um 2° geöffnet
- Klappe um 4° geöffnet
Diese drei Punkte werden mittels eines Spline oder einer Bezier - Kurve miteinander verbunden und stellen eine der erfindungsgemäßen Kurven der Mantelfläche der Dichtungsfläche 13 dar.

Analog wird in jeder Schnittebene verfahren. Zur Festlegung der gesamten Dichtungsflächengestaltung reichen im einfachsten Fall 3 Schnittebenen aus: die Ebene 14, die Ebene analog Schnitt in Fig.1 und eine Ebene mittig zwischen diesen beiden. Zwischen diesen Ebenen wird interpoliert, die Gestaltung der Dichtungsfläche 13 auf der anderen Seite der Ebene analog Schnitt in Fig.1 wird vorzugsweise symmetrisch zur Schnittebene analog Fig.1 gewählt.

Ob man für die Abbildung der Mantelfläche teilweise gerade Streckenabschnitte wählt, oder vorzugsweise Kurven, oder generell Kurven, hängt im wesentlichen davon ab, welchen Aufwand man bei der Herstellung der Armatur betreiben will.

Eine vorzugsweise Ausführungsform:
Es sind die Ebenen 15, 16, 17 gegeben. Der Normalenvektor dieser Ebenen ist jeweils identisch, somit sind die Ebenen zueinander parallel. Die Ebenen sind entlang des Normalenvektors der Ebenen voneinander verschoben. In der Darstellung wurde die Rohrleitungsachse 8 als Normalenvektor gewählt.

Auf der Ebene 15 ist der Querschnitt 18 dargestellt. Vorzugsweise ist dieser Querschnitt 18 durch eine Ellipse dargestellt aber auch Ovale oder andere beliebige Konturen sind möglich. Auf der Grundfläche 18 liegen die Punkte 18a, 18b, 18c, 18d. Die in der Ebene 15 liegenden Hauptachsen 21 und 22 der Grundfläche 18 sind vorzugsweise orthogonal zueinander. Die Hauptachse 21 verbindet die Punkte 18b und 18d. Die Hauptachse 22 verbindet die Punkte 18a und 18c. Vorzugsweise ist die Hauptachse 21 parallel zur Klappenscheibendrehachse 6.

Auf der Ebene 16 ist der Querschnitt 19 dargestellt. Erfindungsgemäß ist dieser Querschnitt durch einen Kreis dargestellt. Vorzugsweise ist der Kreisdurchmesser der durch den Streckenabschnitt 19a - 19c dargestellt wird, kleiner als die kleinere der Hauptachsen 21, 22 des Querschnittes 18. Vorzugsweise ist der Streckenabschnitt 19bd parallel zur Hauptachse 21

Auf der Ebene 17 ist der Querschnitt 20 dargestellt. Vorzugsweise ist dieser Querschnitt durch zwei Ellipsenhälften 20a und 20b dargestellt, aber auch Ovale oder andere beliebige Konturen sind möglich. Vorzugsweise sind im Querschnitt 20 sowohl der Streckenabschnitt 20ac als auch 20bd kürzer als der Durchmesser des Kreises 19. Vorzugsweise ist der Querschnitt 20 symmetrisch zum Streckenabschnitt 20ac.

Vorzugsweise liegen auf einer Geraden 23, die vorzugsweise, aber nicht zwingend, Bestandteil der Mantelfläche 10 ist, die folgenden Punkte:
- Punkt 18d des Querschnittes 18
- und der Punkt 19d des Querschnittes 19
- und der Punkt 20d der Grundfläche 20.

Vorzugsweise liegen auf einer anderen Geraden, die vorzugsweise, aber nicht zwingend, Bestandteil der Mantelfläche 10 ist, die folgenden Punkte:
- Punkt 18a des Querschnittes 18
- und der Punkt 19a des Querschnittes 19
- und der Punkt 20a der Grundfläche 20.

Vorzugsweise liegen auf einer anderen Geraden, die vorzugsweise, aber nicht zwingend, Bestandteil der Mantelfläche 10 ist, die folgenden Punkte:
- Punkt 18b des Querschnittes 18
- und der Punkt 19b des Querschnittes 19
- und der Punkt 20b der Grundfläche 20.

Die Mantelfläche 10 in dem soeben beschriebenen Bereich, der durch die Streckenabschnitte 18b-20b un 18d-20d begrenzt wird und in dem der Streckenabschnitt 18a-20a liegt, besitzt eine Mantelfläche die aus geraden Streckenabschnitten besteht. Es muß klargestellt werden, daß dieser Bereich trotzdem weder als Pyramide noch als Kegel bezeichnet werden kann. Die Geraden dieses Bereiches haben keinen gemeinsamen Schnittpunkt.

Die Punkte 18c und 19c und 20c werden mit einer nicht geraden Kurve 27 miteinander verbunden. Vorzugsweise ist diese Kurve stetig und monoton, z.B. eine Parabel. Die Mantelfläche 10 in dem Bereich, der durch die Streckenabschnitte 18b-20b un 18d-20d begrenzt wird und in dem die Kurve 18c-20c liegt, besitzt vorzugsweise eine Mantelfläche die an keiner Stelle aus geraden Streckenabschnitten besteht.

Der Mantelkörper 10 besitzt vorzugsweise aber nicht zwingend eine Symmetrieebene die durch die Punkte 18a, 18c, 19a, 19c eindeutig beschrieben wird.

Der Körper kann eine Symmetrieachse 9 besitzen.

Vorzugsweise ist die Ebene 16 identisch mit der Dichtungsebene 7. Vorzugsweise ist der kreisförmige Querschnitt 19 in der Ebene 16 zentrisch um die Rohrleitungsachse 8 angeordnet.

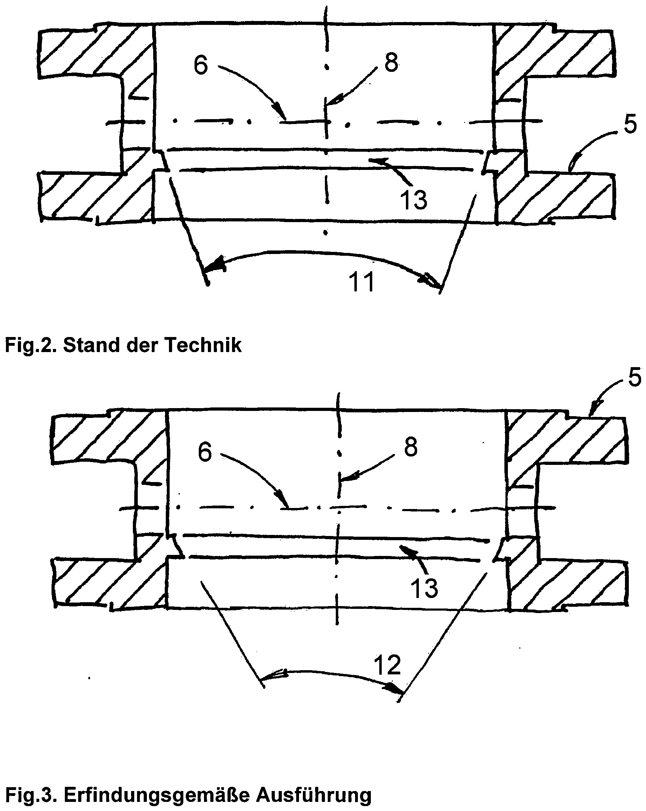

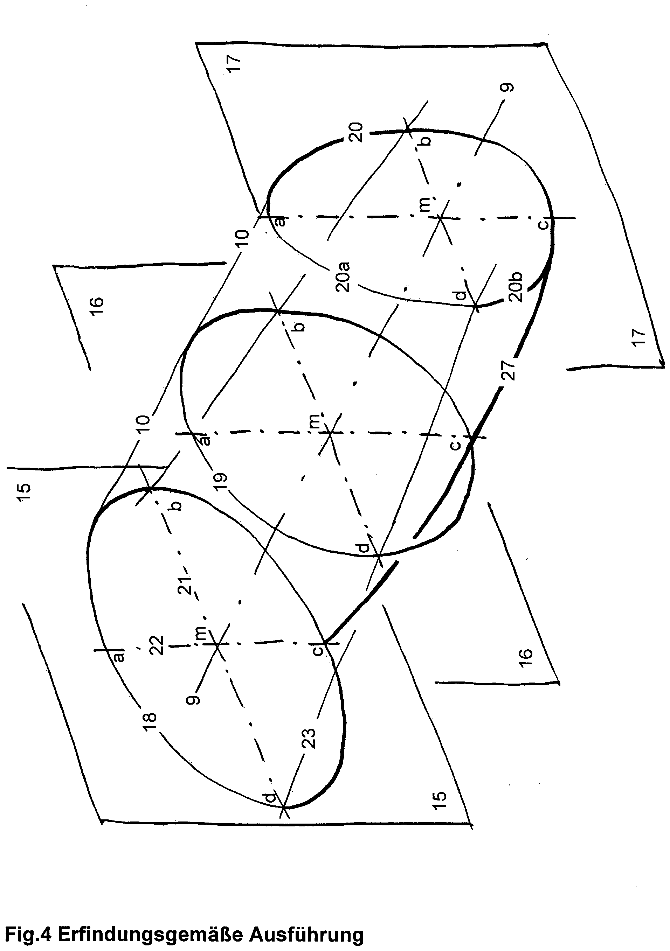

Eine Definition des erfindungsgemäßen Körpers ist am einfachsten möglich, wenn alle drei Ebenen 15,16,17 mit den dazugehörigen Querschnitten 18,19,20 der Mantelfäche 10 auf den jeweiligen Ebenen dargestellt werden und 2 Mantellinien zumindest in der Ebene gemäß Fig.1 und zwei Mantellinien in der Ebene gemäß Fig.2 festgelegt werden. Die Dazwischenliegenden Bereiche können interpoliert werden.

Die Vorteile der Konstruktion gegenüber bisherigen Lösungen werden anhand eines Schnittes durch das Klappengehäuse 5 in der Schnitt - Ebene 14 erläutert, der in Figur 5 perspektivisch dargestellt ist. Die Draufsicht auf diesen Schnitt ist in der Figur 6 für ein Gehäuse nach dem Stand der Technik und in der Figur 7 für ein erfindungsgemäßes Gehäuse dargestellt. Alle anderen Parameter der beiden Konstruktionen sind identisch: Asymmetrie 1, Asymmetrie 2, Asymmetrie 3, etc. Ein in der Dichtungsebene 7 und in der Schnittebene 14 liegender Punkt der Klappendichtung bewegt sich während der Öffnung der Armatur entlang des dargestellten Kreisbogensegmentes, der um die Klappenscheibendrehmitte 6 geschlagen wird.

Man erkennt deutlich, daß sich dieser Punkt in der erfindungsgemäßen Ausführung wesentlich schneller von der Dichtungsfläche wegbewegt. Dieser Unterschied ist leicht sichtbar indem man die Entfernung der Dichtung vom Sitz nach 45° Öffnung der Klappenscheibe, das Maß 24 aus der Figur 6 mit dem Maß 25 aus der Figur 7 vergleicht.

Das Maß 25 ist in der beispielhaft gezeigten, erfindungsgemäßen Ausführung doppelt so groß, als das entsprechende Maß 24 in der Ausführung nach dem Stand der Technik.

Ein weiterer Vorteil ist aus Figur 2 und Figur 3 ersichtlich. Beide stellen einen Schnitt durch das Klappengehäuse 5 dar, wobei die Rohrleitungsachse 8 in der Schnittebene liegt und wobei die Klappenscheibendrehmitte 6 den Normalenvektor der Schnittebene darstellt. Es ist deutlich sichtbar, daß der Öffnungswinkel 11 der Dichtungsfläche 13 nach dem Stand der Technik wesentlich kleiner ist, als der erfindungsgemäße Öffnungswinkel 12 der Dichtungsfläche 13 in der erfindungsgemäßen Lösung. Ein Verkeilen oder Verklemmen der Dichtung in der Dichtfläche ist damit in der erfindungsgemäßen Lösung wesentlich unwahrscheinlicher. Man beachte, daß in der Figur 3 die Mantellinien für den Winkelvergleich durch Tangenten angenähert wurden.

Zusammenfassend kann man feststellen, daß die erfindungsgemäße Gestaltung der Dichtungsfläche 13 es dem Konstrukteur bei sonst identischen Randbedingungen ermöglicht, eine Absperrklappe mit kleinerer Reibung herzustellen.

Es ist aber ebenso möglich eine Absperrklappe mit identischem Reibungsverhalten herzustellen, wie die marktüblichen Produkte, bei gleichzeitiger Verkleinerung der Asymmetrie 2. Die Verkleinerung der Asymmetrie 2 wird automatisch zu einer Verringerung des Drehmomentes führen, welches notwendig ist um die Armatur zu betätigen, bzw. dichtzuschließen.

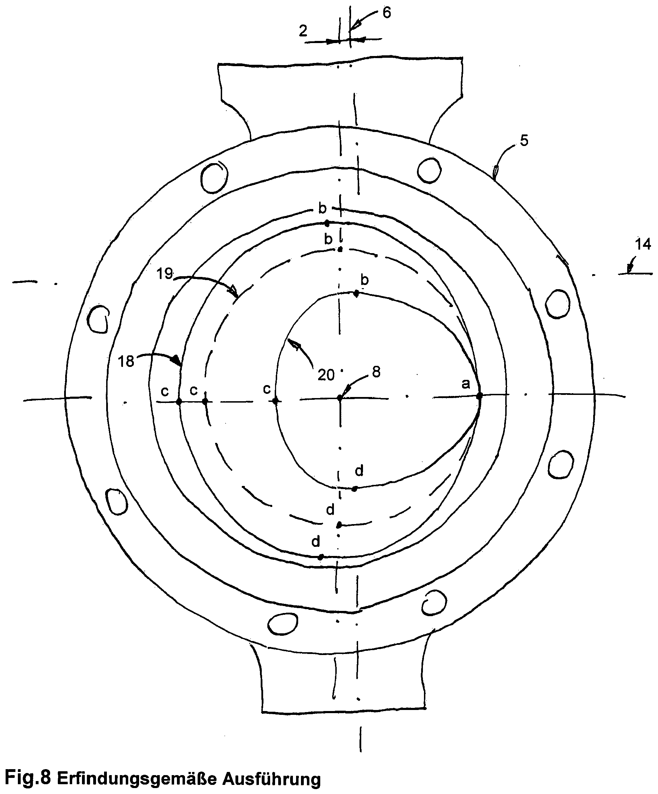

Die Fig.8 zeigt die erfindungsgemäße Gestaltung schematisch anhand eines Absperrklappengehäuses 5. Die Blickrichtung auf die Skizze zeigt von der Seite der Klappenscheibendrehmitte 6 her in Richtung der Dichtebene 7.

Die Figur 8 stellt auch die vorzugsweise Gestaltung eines erfindungsgemäßen Absperrklappengehäuses dar. Schematisch sind die Querschnitte 18, 19 und 20 in das Gehäuse 5 und dort in der Dichtungsfläche eingezeichnet. Alle diese Schnitte liegen in Ebenen die zueinander parallel sind. Der Normalenvektor aller dieser Ebenen ist vorzugsweise, aber nicht zwingend, die Rohrleitungsachse 8. Diese Ebenen sind vorzugsweise, aber nicht zwingend, parallel zur Klappenscheibendrehmitte 6.

Der Querschnitt 18 der Dichtfläche 13 ist derjenige, der der Achse 6 der Klappenscheibendrehmitte am nächsten liegt. Der Querschnitt 18 ist vorzugsweise im Wesentlichen durch ein Oval, vorzugsweise im Wesentlichen durch eine Ellipse dargestellt. Vorzugsweise beträgt der Unterschied in der Länge der kürzesten Ellipsenachse 21 (18ac) und der längsten Ellipsenachse 22 (18bd) 0,5% bis 7%, vorzugsweise 2% bis 4%. Die längere Achse 21 dieser Ellipse liegt vorzugsweise parallel zur Klappenscheibendrehmitte 6.

Der Querschnitt 19 liegt vorzugsweise in der Dichtungsebene 7, in der auch die Klappenscheibendichtung liegt, wenn die Absperrklappe geschlossen ist. Der Querschnitt 19 ist vorzugsweise im Wesentlichen oval, vorzugsweise im Wesentlichen kreisrund vorzugsweise perfekt kreisrund. Vorzugsweise ist der Querschnitt rotationssymmetrisch zur Rohrleitungsachse 8, sprich die Kreismitte des Querschnittes 19 ist die Rohrleitungsachse.

Die Querschnitte 18 und 19 sind geometrisch nicht ähnlich bei einer Ansicht der beiden Querschnitte aus der gleichen Richtung, z.B. bei der Draufsicht auf beide Querschnitte 18 und 19 entlang der Rohrleitungsachse 8. Mit einer reinen Vergrößerung oder Verkleinerung des einen Querschnittes 18 läßt sich der andere Querschnitt 19 nicht abbilden. Als Beispiel und vorzugsweise Gestaltungsform könnte der Querschnitt 18 durch eine Ellipse dargestellt sein, der Querschnitt 19 könnte durch einen Kreis dargestellt sein.

Der Querschnitt 20 ist vorzugsweise durch ein Oval, vorzugsweise durch zwei Ellipsenhälften dargestellt. Vorzugsweise beträgt der Unterschied in der Länge der Ellipsenachse 20mb (die durch Verbindung der Punkte 20m und 20b entsteht, vereinfacht 20mb) und der längsten Ellipsenachse (die durch Verbindung der Punkte 20m und 20a entsteht, vereinfacht 20ma) 0,5% bis 7%, vorzugsweise 2% bis 4%. Vorzugsweise liegt die längste der Ellipsenachsen, die Achse 20am senkrecht zur Klappenscheibendrehmitte 6.

Vorzugsweise gehen die beiden den Querschnitt 20 bildenden Ellipsenhälften 20a und 20b tangential ineinader über. Vorzugsweise besitzen die beiden Elipsenhälften eine identische Hauptachse 20bd. Vorzugsweise findet der Übergang der Ellipsenhälften ineinader an den Punkten 20b und 20d statt.

Vorzugsweise liegen die Punkte a der Querschnitte 18, 19, 20 des Mantelkörpers 10 auf einem geraden Streckenabschnitt der vorzugsweise parallel zur Rohrleitungsachse 8 ist.

Vorzugsweise liegen die Punkte c der Querschnitte 18, 19, 20 des Mantelkörpers 10 auf einer Kurve, die in einer Ebene liegt, deren Normalenvektor die Klappenscheibendrehmitte ist und vorzugsweise liegt in dieser Ebene auch die Rohrleitungsachse 8. Vorzugsweise teilt diese Ebene das Gehäuse 5 in zwei im Wesentlichen symmetrischen Teile. Der sich aus der Verbindung der Punkte 18c 19c 20c bildende Kurvenabschnitt und die an diesen in der Dichtungsebene 7 angelegte Tangente und die vorzugsweise in der gleichen Ebene liegende Rohrleitungsachse bilden einen Winkel 26 von vorzugsweise 15° bis 35°, vorzugsweise 20° bis 30°, idealerweise 24° bis 27°.

Vorzugsweise ist der Mantelkörper 10 symmetrisch zu der Ebene in der die Rohrleitungsachse 8 liegt und deren Normalenvektor die Klappenscheibendrehachse 6 ist. In dieser Ebene liegen vorzugsweise die Punkte a und die Punkte c der Querschnitte 18 und 19 und 20.

Die Bearbeitung der Dichtungsfläche 13 einer solchen Armatur kann auf verschiedene Weisen erfolgen.

Es ist möglich, gemäß der schematischen Figur 10 die Dichtungsfläche 13 der Absperrklappe mit einem Kugelfräser und dem Verfahren des sogenannten "Abzeilen" herzustellen. Hierzu würde das Gehäuse 5 auf einer CNC gesteuerten Fräsmaschine gespannt werden und in Schritten würde die Dichtungsfläche 13 "abgezeilt" werden. Die Bearbeitung würde natürlich in kleinen Schritten erfolgen, aber das Prinzip ist eindeutig erklärt, wenn man sich verdeutlicht daß der Kugelfräser zuerst den Querschnitt 18 (Ellipse) in der Ebene 15 bearbeiten würde, indem er zweidimensional in der Ebene 15 bewegt werden würde, anschließend würde der Kugelfräser entlang seines Schaftes weiterbewegt werden (analog parallel zur Achse 8) in die Ebene 16 um den Querschnitt 19 (Kreis) in der Ebene 16 zu bearbeiten. Abschließend würde der Kugelfräser in die Ebene 17 bewegt werden um den Querschnitt 20 (Oval) in der Ebene 17 zu bearbeiten. Die Dichtungsfläche würde auf diese Art und Weise "Schicht für Schicht", oder "Zeile für Zeile" bearbeitet werden. Selbstverständlich würde die Bearbeitung nicht nur in den drei o.g. Ebenen stattfinden, sondern der Fräser würde nach erfolgter Bearbeitung einer Ebene in kleinen Schritten entlang seines Schaftes weiterbewegt werden, um die weiteren Ebenen zu bearbeiten. Die Ebenen, in denen die Bearbeitung stattfinden würde, könnten jeweils z.B. um 0,1mm voneinander entfernt sein.

Eine weitere mögliche Bearbeitungsweise ist das simultane 5-Achs Fräsen mit einem Zylinderfräser zumindest für die Bereiche der Mantelfäche, die durch gerade Strahlen abgebildet werden. Hierzu würde der Zylinderfräser so bewegt werden, daß stets eine Linienberührung des Fräsers mit der Dichtungsfläche 13 gewährleistet ist. Diese Linie entspricht stets den Streckenabschnitten der Mantelfäche 10, die die Dichtungsfläche 13 darstellen. So würde der Fräser die Dichtungsfläche an der Linie 18a-19a-20a berühren, anschließend an der Linie 18b-19b-20b und abschließend 18d-19d-20d. Die Bearbeitung der Bereiche dazwischen erfolgt analog.

Eine dritte und gleichzeitig die bevorzugte Bearbeitungsweise erfolgt durch das sogenannte Unrunddrehen. Hierbei dreht sich das Gehäuse 5 um die Rohrleitungsachse 8. Die Spitze eines Drehstahls befindet sich zunächst in der Ebene 15. Synchron zur Drehung des Gehäuses 5 um die Rohrleitungsachse 8 wird der Drehstahl innerhalb der Ebene 15 entlang der Achsen 18ac und 18bd ausgelenkt um die Ellipse 18 ins Gehäuse 5 zu drehen. Anschließend wird die Spitze des Drehstahls in die Ebene 16 bewegt und in der klassischen Drehbearbeitung wird der Kreis 19 ins Gehäuse 5 gedreht. Anschließend wird die Spitze des Drehstahls in die Ebene 17 bewegt. Synchron zur Drehung des Gehäuses 5 um die Rohrleitungsachse 8 wird der Drehstahl innerhalb der Ebene 17 entlang der Achsen 20ac und 20bd ausgelenkt um das aus zwei Ellipsenhälften bestehende Oval 20 ins Gehäuse 5 zu drehen. Die Bearbeitung der Bereiche zwischen den og. Ebenen erfolgt analog.

### Bezugszeichenliste

**1** Asymmetrie 1
**2** Asymmetrie 2
**3** Asymmetrie 3
**4** Asymmetrie 4
**5** Klappengehäuse
**6** Klappenscheibendrehmitte, Klappenscheibendrehachse
**7** Dichtungsebene
**8** Rohrleitungsachse
**9** Schwerpunktachse, Symmetrieachse
**10** Mantelkörper der Dichtfläche
**11** Öffnungswinkel Stand der Technik
**12** Öffnungswinkel erfindungsgemäß
**13** Dichtungsfläche
**14** Schnittebene
**15** Ebene 1
**16** Ebene 2
**17** Ebene 3
**18** Querschnitt 1
**19** Querschnitt 2
20 Querschnitt 3
**21** Hauptachse 1
**22** Hauptachse 2
**23** Gerader Streckenabschnitt
**24** Entfernung vom Sitz nach 45° Öffnung Stand der Technik
**25** Entfernung vom Sitz nach 45° Öffnung erfindungsgemäß
**26** Winkel
**27** Kurven des Gittermodells der Mantelfläche

## Patentansprüche

1. Absperrklappe zur steuerbaren Fluiddurchströmung in einer Rohrleitung, wobei die Absperrklappe eine Klappenscheibe (7) mit einer Dichtungsfläche (13) und ein Gehäuse (5) aufweist, **dadurch gekennzeichnet, dass** die Konstruktion der Absperrklappe mindestens sechs Asymmetrien aufweist, dass die Klappenscheibendrehmitte (6) aus der Dichtungsebene (7) in Richtung der Rohrleitungsachse (8) versetzt ist (Asymmetrie dass zusätzlich die Klappenscheibendrehmitte (6) senkrecht zur Klappenscheibendrehmitte (6) und senkrecht zur Rohrleitungsachse (8) in Richtung einer der Wandungen des Gehäuses (5 verschoben ist (Asymmetrie 2), dass zusätzlich die Dichtungsfläche (13) durch den Mantel eines Körpers (10) dargestellt ist, der nicht symmetrisch zur Rohrleitungsachse (8) ist (Asymmetrie 3), und dass zusätzlich der Mantel des Körpers (10) durch Kurven abgebildet wird, die sich nicht alle in einem Punkt schneiden (Asymmetrie 4), wobei mindestens eine der Kurven eine Gerade is und wobei mindestens einer der Kurven keine Gerade ist, wobei zusätzlich der Mantel des Körpers (10) einen ersten Querschnitt (18) in einer ersten Ebene (15) und einen zweiten Querschnitt (20) in einer zweiten zur ersten Ebene (15) parallelen Ebene (17) besitzt wobei zusätzlich mindestens einer der ersten und zweiten Querschnitte (18, 20) nicht kreisrund ist (Asymmetrie 5), und wobei sich zusätzlich der zweite Querschnitt (20) nicht durch bloße Verschiebung des ersten Querschnittes (18) in die zweite Ebene (17) entlang des Normalenvektors der ersten Ebene (15) abbilden lässt, auch dann nicht, wenn der erste Querschnitt (18) vergrößert oder verkleinert würde; (Asymmetrie 6), wobei der Mantel des Körpers (10) in einer dritten Ebene (16) einen dritten Querschnitt (19) besitzt, der kreisrund ist und wobei dieser dritte Querschnitt (19) rotationssymmetrisch zur Rohrleitungsachse (8) ist und dieser dritte Querschnitt (19) in der Dichtungsebene (7) liegt.

2. Absperrklappe nach Anspruch 1 **dadurch gekennzeichnet, dass** der Mantel des Körpers (10) in der ersten Ebene (15), die parallel zu der dritten Ebene (16) ist, einen Querschnitt (18) besitzt, der oval ist.

3. Absperrklappe nach Anspruche 1 **dadurch gekennzeichnet, dass** der Mantel des Körpers (10) in der ersten Ebene (15) einen Querschnitt (18) besitzt, der die Form einer Ellipse hat, die eine erste Ellipsenachse (21) und eine zweite Ellipsenachse (22) aufweist, und dass vorzugsweise der Unterschied in der Länge der ersten Ellipsenachse (21) und der zweiten Ellipsenachse (22) 0,5% bis 7%, idealerweise 2% bis 4% beträgt.

4. Absperrklappe nach Anspruch 3 **dadurch gekennzeichnet, dass** die erste Ellipsenachse (21) parallel zur Klappenscheibendrehmitte (6) liegt.

5. Absperrklappe nach einem oder mehreren der Ansprüche 1-4 **dadurch gekennzeichnet, dass** der Mantel des Körpers (10) einen Strahl (18a 19a 20a) besitzt und dass dieser Strahl zu der Rohrleitungsachse (8) nicht windschief liegt.

6. Absperrklappe nach einem oder mehreren der Ansprüche 1-5 **dadurch gekennzeichnet, dass** der zweite Querrschnitt (20) oval ist, wobei das Oval des zweiten Querschnittes (20) durch zwei Ellipsenhälften (20a) und (20b) gebildet wird, die ineinander tangential übergehenwobei die Ellipsenhälften (20a) und (20b) eine identische Hauptachse (20db) haben und dass die Ellipsenhälften (20a) und (20b) jeweils an den Punkten (20d) und (20b) ineinader tangential übergehen, wobei vorzugsweise der Unterschied in der Länge der kürzesten Ellipsenachse die durch Verbindung der Punkte (20m) und (20c) entsteht, und der längsten Ellipsenachse die durch Verbindung der Punkte (20m) und (20a) entsteht, 0,5% bis 7%, vorzugsweise 2% bis 4% beträgt und wobei die kürzere Ellipsenachse (20mc) senkrecht zur Klappenscheibendrehmitte (6) liegt.

7. Absperrklappe nach einem oder mehreren der Ansprüche 1-6 **dadurch gekennzeichnet, daß** die ersten Punkte (a) der ersten, zweiten und dritten Querschnitte (18), (20), (19) des Mantels des Körpers (10) in einer Achse liegen, wobei diese Achse vorzugsweise parallel zur Rohrleitungsachse (8) ist.

8. Absperrklappe nach einem oder mehreren der Ansprüche 1-7 **dadurch gekennzeichnet, dass** die zweiten Punkte (c) der ersten, zweiten und dritten Querschnitte (18), (20), (19) des Mantels des Körpers (10) auf einer Kurve liegen, wobei diese Kurve vorzugsweise in einer Ebene liegt, deren Normalenvektor die Klappenscheibendrehmitte (6) ist und in der die Rohrleitungsachse (8) liegt, wobei vorzugsweise diese Ebene die Dichtungsfläche (13) in zwei gleiche Teile teilt.

9. Absperrklappe nach Anspruch 8 **dadurch gekennzeichnet, dass** die an die Kurve die sich aus der Verbindung der zweiten Punkte (18c) (19c) (20c) in der Dichtungsebene (7) ergibt, gelegte Tangente und die vorzugsweise in der gleichen Ebene liegende Rohrleitungsachse einen Winkel (26) bilden wobei dieser Winkel vorzugsweise 15° bis 35°, vorzugsweise 20° bis 30°, idealerweise 24° bis 26° groß ist.

10. Absperrklappe nach einem oder mehreren der Ansprüche 1-9 **dadurch gekennzeichnet, daß** der Mantel des Körpers (10) symmetrisch ist zu der Ebene in der die Rohrleitungsachse (8) liegt und deren Normalenvektor die Klappenscheibendrehmitte (6) ist, wobei in dieser Ebene vorzugsweise die ersten Punkte (a) und die zweiten Punkte (c) der ersten, zweiten und dritten Querschnitte (18) und (20) und (19) liegen.

11. Absperrklappe nach einem oder mehreren der Ansprüche 1-10 **dadurch gekennzeichnet dass** die Form der Mantels des Körpers (10) so gewählt wurde, dass sich die Dichtung am gesamten Umfang der Dichtungsfläche (13) während der Öffnung, vorzugsweise für die ersten 15° der Öffnung gleich schnell mit der Drehung der Klappenscheibe von der Dichtungsfläche (13) entfernt, unabhängig vom Abstand des jeweiligen Bereiches der Dichtungsfläche (13) von der Klappenscheibendrehmitte (6).

## Claims

1. Butterfly valve for controllable fluid flow, **characterized in that** the design has at least six asymmetries, **characterized in that** the valve disc center of rotation (6) is offset from the sealing plane (7) in the direction of the pipe axis 8 (Asymmetry 1) and that additionally the valve disc center of rotation (6) is perpendicular to the valve disc center of rotation (6) and perpendicular to the pipe axis (8) is shifted in the direction of one of the walls of the housing (5) (Asymmetry 2) and that the sealing surface (13) is also represented by the jacket of the body (10), which is not symmetrical to the pipe axis (8) (Asymmetry 3) and that the jacket of the body (10) is also shown by curves which do not all intersect at one point (Asymmetry 4) and where at least one of the curves is a straight line and where at least one of the curves is not a straight line and that in addition the jacket of the body (10) has the cross-section (18) and the cross-section (20) in planes (15) and (17) lying parallel to one another, and that in addition at least one of the cross-sections is not circular (Asymmetry) (5) and wherein in addition the cross-section (20) cannot be mapped simply by shifting the cross-section (18) into the plane (17) along the normal vector of the plane (15), even if the cross-section (18) were enlarged or reduced (Asymmetry 6) and where the jacket body (10) has a circular cross-section (19) in a plane (16) and that this cross-section (19) is rotationally symmetrical to the pipe axis (8) and this cross-section (19) lies in the sealing plane (7).

2. Butterfly valve according to Claims 1, **characterized in that** the jacket body (10) has a cross-section (18) which is oval in a plane (15) which is parallel to the plane (16).

3. Butterfly valve according to Claims 1, **characterized in that** the jacket body (10) has a cross-section (18) in a plane (15) which is in the shape of an ellipse and that preferably the difference in the length of the ellipse axis (21) and the ellipse axis (22) is 0.5 % to 7%, ideally 2% to 4%.

4. Butterfly valve according to Claim 3, **characterized in that** the axis (21) is preferably parallel to the center of rotation (6) of the valve disc.

5. Butterfly valve according to one or more of Claims 1-4, **characterized in that** the lateral surface (10) is imaged at least at one point by a straight beam which is created by the connection of the cross-sections (18) and (19) and (20).

6. Butterfly valve according to one or more of claims 1-5, **characterized in that** the oval of the cross-section (20) is formed by two elliptical halves (20a) and (20b), which merge tangentially into one another, the elliptical halves (20a) and (20b) having an identical main axis (20db) and that the elliptical halves (20a) and (20b) each merge tangentially at points (20d) and (20b), the difference in the length of the shortest elliptical axis created by connecting points (20m) and (20c) and the longest elliptical axis created by connecting points 20m and 20a, 0.5% to 7 %, preferably 2% to 4%, and wherein the shorter, the elliptical axis (20mc), is perpendicular to the center of the disc disc (6).

7. Butterfly valve according to one or more of claims 1-6, **characterized in that** the points a of the cross-sections (18), (19), (20) of the maritime body (10) lie in one axis, this axis preferably being parallel to the pipe axis (8).

8. Butterfly valve according to one or more of claims 1-7, **characterized in that** the points (c) of the cross-sections (18), (19), (20) of the casing body (10) lie on a curve, this curve preferably lying in a plane whose normal vector is the valve disc center of rotation (6) and in the the pipe axis (8) lies. This plane preferably divides the sealing surface (13) into two equal parts.

9. Butterfly valve according to claim 8, **characterized in that** the tangent to the curve from the connection of the points (18c) (19c) (20c) in the sealing plane (7) and the pipe axis preferably lying in the same plane form an angle (26), this angle preferably 15 ° to 35 °, preferably 20 ° to 30 °, ideally 24 ° to 26 °.

10. Butterfly valve according to one or more of Claims 1-9, **characterized in that** the casing body (10) is symmetrical to the plane in which the pipe axis (8) lies and whose normal vector is the center of rotation (6) of the valve disc. Points a and points (c) of cross-sections (18) and (19) and (20) are preferably located in this plane.

11. Butterfly valve according to one or more of claims 1-10, **characterized in that** the shape of the outer surface of the body (10) was chosen so that the seal on the entire circumference of the sealing surface (13) during the opening, preferably for the first 15° of the opening at the same speed as the Rotation of the valve disc away from the sealing surface (13), regardless of the distance of the respective area of the sealing surface (13) from the valve disc center of rotation (6).

## Revendications

1. Vanne à papillon pour un débit de fluide contrôlable, **caractérisée en ce que** la construction présente au moins six asymétries, **caractérisée en ce que** le centre de rotation du disque de vanne 6 est décalé du plan d'étanchéité 7 dans le sens de l'axe de conduite 8: Asymétrie 1 et en plus le centre du disque valve de rotation 6 est perpendiculaire au centre du disque de soupape de rotation 6 et perpendiculaire à la canalisation axe 8 est décalé dans la direction de l'une des parois du logement 5: Asymétrie 2 et **en ce que** la surface d'étanchéité 13 est également représentée par l'enveloppe du corps 10, qui est non symétrique par rapport à la conduite axe 8: Asymmetry 3 et que l'enveloppe du corps 10 est également représenté par des courbes qui ne sont pas tous se coupent en un seul point: Asymmetry 4 et qu'en outre l'enveloppe de le corps 10 a la section 18 et la section 20 dans des plans 15 et 17 parallèles entre eux, et qu'en plus au moins une des sections n'est pas circulaire: Asymme trie 5 et dans lequel de plus la section transversale 20 ne peut pas être cartographiée simplement en décalant la section transversale 18 dans le plan 17 le long du vecteur normal du plan 15, même si la section transversale 18 a été agrandie ou réduite; Asymétrie 6. dans lequel l'enveloppe du corps (10) dans un troisième plan (16) a une troisième section transversale (19) qui est circulaire et dans laquelle cette troisième section transversale (19) est symétrique en rotation par rapport à l'axe du tuyau (8) et à cette troisième croix la section (19) du niveau d'étanchéité (7) se trouve.

2. Vanne papillon selon la revendication 1, **caractérisée en ce que** la chemise du corps (10) dans le premier plan (15), qui est parallèle au troisième plan (16), a une section transversale (18) qui est ovale .

3. Vanne papillon selon la revendication 1, **caractérisée en ce que** la chemise du corps (10) dans le premier plan (15) a une section transversale (18) qui a la forme d'une ellipse, qui présente un premier axe du ellipse (21) et un deuxième axe de l'ellipse (22), et que la différence de longueur du premier axe elliptique (21) et du deuxième axe elliptique (22) est de préférence de 0,5% à 7%, idéalement de 2% à 4%.

4. Vanne papillon selon la revendication 3, **caractérisée en ce que** le premier axe elliptique (21) est parallèle au centre du disque de vanne (6).

5. Vanne papillon selon une ou plusieurs des revendications 1 à 4, **caractérisée en ce que** la chemise du corps (10) présente une poutre (18a 19a 20a) et **en ce que** cette poutre n'est pas biaisée par rapport à l'axe du tuyau (8).

6. Vanne papillon selon une ou plusieurs des revendications 1 à 5, **caractérisée en ce que** l'ovale de la section transversale 20 est formé par deux moitiés elliptiques 20a et 20b, qui se confondent tangentiellement l'une dans l'autre, les moitiés elliptiques 20a et 20b ayant une axe principal 20db et **en ce que** les moitiés elliptique 20a et 20b chaque fusion tangentiellement aux points 20d et 20b, la différence de longueur du plus petit axe elliptique créé par les points de connexion 20m et 20c et l'axe le plus long elliptique créé par les points de connexion 20m et 20a, 0,5% à 7%, de préférence de 2% à 4%, et dans lequel la plus courte, le 20MC axe elliptique, est perpendiculaire au centre du disque de clapet 6.

7. Vanne papillon selon une ou plusieurs des revendications 1 à 6, **caractérisée en ce que** les points a des sections transversales 18, 19, 20 du corps maritime 10 se trouvent dans un axe, cet axe étant de préférence parallèle à l'axe 8 de la conduite.

8. Vanne papillon selon une ou plusieurs des revendications 1 à 7, **caractérisée en ce que** les points c des sections transversales 18, 19, 20 du corps de boîtier 10 se trouvent sur une courbe, cette courbe se trouvant de préférence dans un plan dont le vecteur normal est le centre du disque de soupape de rotation 6 et dans le tuyau axe 8 mensonges. Ce plan divise de préférence la surface d'étanchéité 13 en deux parties égales.

9. Vanne à papillon selon une ou plusieurs des revendications 1 à 8, **caractérisée en ce que** la tangente à la courbe de la connexion des points 18c 19c 20c dans le plan d'étanchéité 7 et l'axe de conduite se trouvant de préférence dans le même plan forment un angle 26, cet angle de préférence de 15 ° à 35 °, de préférence 20 ° à 30 °, de préférence 24 ° à 26 °.

10. Vanne papillon selon une ou plusieurs des revendications 1 à 9, **caractérisée en ce que** le corps de boîtier 10 est symétrique du plan dans lequel se trouve l'axe de conduite 8 et dont le vecteur normal est le centre de rotation 6 du disque de vanne. Les points a et les points c des sections 18 et 19 et 20 sont de préférence situés dans ce plan.

11. Vanne papillon selon une ou plusieurs des revendications 1 à 10, **caractérisée en ce que** la forme de la surface extérieure du corps 10 a été choisie de manière à ce que l'étanchéité sur toute la circonférence de la surface d'étanchéité 13 lors de l'ouverture, de préférence pour la première 15 ° de l'ouverture à la même vitesse que la rotation du disque de soupape à l' écart de la surface d'étanchéité 13, quelle que soit la distance de la zone respective de la surface d'étanchéité 13 du centre du disque de soupape de rotation 6.
